# EUROPEAN PATENT APPLICATION

(11) **EP 4 663 179 A1**
(43) Date of publication of application: **17.12.2025**
(21) Application number: 25172428.2
(22) Date of filing: 24.04.2025
(51) Int. Cl.: A61H 7/00, C08L 83/04

(54) **FORMULA OF COSMETIC OPTICAL SILICONE MASSAGE HEAD AND PREPARATION PROCESS THEREFOR**

(30) Priority: 12.06.2024 CN 202410755573
(71) Applicant: Guangzhou Candear Packing Products Co., Ltd, Guangzhou 510000 (CN)
(72) Inventor: CAI, Guoxiang, GUANGZHOU CITY, 510000 (CN)
(74) Representative: Diaz Nunez, Joaquin

(57) **Abstract**

The present invention discloses a formula of a cosmetic optical silicone massage head and a preparation process therefor. The formula of the cosmetic optical silicone massage head includes a component A and a component B; where the component A includes the following raw materials in parts by weight: 91.8% of polymethylsiloxane, 4.95% of hydroxy silicone oil, 2.75% of stearic acid, and 0.5% of platinum catalyst; and the component B includes the following raw materials in parts by weight: 91.8% of polymethylsiloxane, 4.2% of hydroxy silicone oil, 1.6% of hydrogen silicone oil, 2.3% of stearic acid, and 0.1% of ethynylcyclohexanol. The formula of the cosmetic optical silicone massage head according to the present invention has good fluidity, high transparency, high strength, high tensile strength, and good tear resistance.

## Description

### TECHNICAL FIELD

The present invention relates to the technical field of cosmetic massage heads, and in particular, to a formula of a cosmetic optical silicone massage head and a preparation process therefor.

### BACKGROUND

Cosmetics refer to preparations (other than soap) applied to the human body for beautifying, preserving, or modifying appearance (e.g., for performances), or used for cleansing, perfuming, polishing, correcting, or protecting the skin, hair, nails, eyes, or teeth. Cosmetics are widely used by individuals to modify or improve appearance, such as in response to fashion trends or as an expression of personality. Existing cosmetics are not simply applied, but sometimes are supplemented with instruments to further ensure the effectiveness of the cosmetics. Therefore, massage heads have been developed, typically fabricated from rigid materials to ensure optimal performance.

However, there are defects or problems in the prior art.

The existing cosmetic massage heads have low impact resistance and are prone to tearing and deformation when used for a long period of time. During the preparation process, existing cosmetic massage heads are prone to various problems as the temperature changes, such as severe deformation and cracking at high temperatures. As a result, the thermal conductivity and die-casting completeness of the product made from the cosmetic massage head cannot be guaranteed, resulting in relatively low comfort when the product is in contact with the human body.

### SUMMARY

In view of the defects in the prior art, an objective of the present invention is to provide a formula of a cosmetic optical silicone massage head formula and a preparation process therefor, so as to solve the problems in the background.

To achieve the objective, the present invention provides the following technical solutions.

A formula of a cosmetic optical silicone massage head includes a component A and a component B; where the component A includes the following raw materials in parts by weight: 91.8% of polymethylsiloxane, 4.95% of hydroxy silicone oil, 2.75% of stearic acid, and 0.5% of platinum catalyst; and
the component B includes the following raw materials in parts by weight: 91.8% of polymethylsiloxane, 4.2% of hydroxy silicone oil, 1.6% of hydrogen silicone oil, 2.3% of stearic acid, and 0.1% of ethynylcyclohexanol.

Preferably, the platinum catalyst is tetramethyldisiloxane platinum complex.

The present invention further provides a preparation process for the formula of the cosmetic optical silicone massage head, which includes the following steps:
step 1: preparing the component A and the component B in the parts by weight, and injecting the component A and the component B into a static mixer in a ratio of 1:1 with a silicone feeding system;
step 2: injecting a mixed material from the static mixer into a barrel screw of a silicone injection machine by the feeding system;
step 3: injecting a fully mixed silicone material from the barrel into a mold with the silicone injection machine;
step 4: vacuuming the mold when a mold closure gap is 1 mm;
step 5: after the mold is completely closed, performing high-temperature hot vulcanization molding; and
step 6: opening the mold, and preparing the optical silicone head product by combining air blowing with manual demolding.

Preferably, in the step 4, the mold is vacuumed for 2 seconds when the mold closure gap is 1 mm.

Preferably, in the step 5, a temperature of a front mold is controlled at 140 °C, a temperature of a rear mold is controlled at 135 °C, and high-temperature hot vulcanization is performed for 125 seconds.

Compared with the prior art, the present invention provides a formula of a cosmetic optical silicone massage head formula and a preparation process therefor, which have the following beneficial effects:
The formula of the cosmetic optical silicone massage head has good fluidity, high transparency, high strength, high tensile strength, and good tear resistance. These raw materials do not contain heavy metals and aromatic hydrocarbon solvents, which are non-toxic to the human body, meet biocompatibility, and are more comfortable when in contact with the human body. The preparation process used ensures that there is no serious discoloration and deformation as the temperature changes during the preparation process, and no cracking during the high-temperature sintering process, so that the high permeability and the completeness of the product are effectively improved, the surface strength and the tensile strength of the product are enhanced, and the service life of the cosmetic optical silicone massage head is prolonged.

### DETAILED DESCRIPTION OF EMBODIMENTS

The following clearly and completely describes the technical solutions in embodiments of the present invention with reference to embodiments of the present invention. It is clear that the described embodiments are merely a part rather than all of embodiments of the present invention. Based on the embodiments of the present invention, all other embodiments obtained by those of ordinary skill in the art without creative effort fall within the protection scope of the present invention.

In an embodiment, a formula of a cosmetic optical silicone massage head includes the following raw materials in parts by weight:
a component A: 91.8% of polymethylsiloxane, 4.95% of hydroxy silicone oil, 2.75% of stearic acid, and 0.5% of platinum catalyst; and
a component B: 91.8% of polymethylsiloxane, 4.2% of hydroxy silicone oil, 1.6% of hydrogen silicone oil, 2.3% of stearic acid, and 0.1% of ethynylcyclohexanol.

A weight ratio of the component A to the component B is 1: 1.

Both the component A and the component B are in liquid and viscous state. When stored separately, the two components undergo slow structural solidification and may be stored for up to one year.

The platinum catalyst is tetramethyldisiloxane platinum complex.

Based on the formula of the cosmetic optical silicone massage head, provided is a preparation process for the formula of the cosmetic optical silicone massage head, which includes the following steps:
step 1: injecting the component A and the component B into a static mixer in a ratio of 1:1 with a silicone feeding system;
step 2: injecting a mixed material from the static mixer into a barrel screw of a silicone injection machine by the feeding system;
step 3: injecting a fully mixed silicone material from the barrel into a mold with the silicone injection machine;
step 4: vacuuming the mold for 2 seconds when a mold closure gap is 1 mm;
step 5: after the mold is completely closed, controlling temperatures of a front mold and a rear mold, where the temperature of the front mold is controlled at 140 °C and the temperature of the rear mold is controlled at 135 °C, and performing high-temperature hot vulcanization for 125 seconds before molding;
step 6: opening the mold, and preparing the optical silicone head product by combining air blowing with manual demolding.

The platinum catalyst in the component A is tetramethyldisiloxane platinum complex, which can accelerate the vulcanization speed. The component B can control the vulcanization speed. The mixed material is subjected to hot vulcanization molding after full mixing, so that the vulcanization time may be accurately controlled. The material still has certain fluidity before being fully vulcanized, and various products with complex structures may be molded. In this embodiment, the material is used to mold the massage head of the cosmetic bottle.

It should be noted that, in the step 4, the mold is vacuumed for 2 seconds when the mold closure gap is 1 mm; and in the step 5, the temperature of the front mold is 140 °C, the temperature of the rear mold is 135 °C, and high-temperature hot vulcanization is performed for 125 seconds.

Finally, it should be noted that the foregoing mentioned contents are only preferred embodiments of the present invention and are not intended to limit the present invention. Although the present invention has been described in detail with reference to the foregoing embodiments, those of ordinary skill in the art should understand that modifications may be still made to the technical solutions described in the foregoing embodiments, or equivalent substitutions may be made to some of technical features. Any modification, equivalent replacement, improvement, or the like made without departing from the spirit and principle of the present invention shall fall within the protection scope of the present invention.

## Claims

1. A formula of a cosmetic optical silicone massage head, comprising:
a component A and a component B; wherein the component A comprises the following raw materials in parts by weight: 91.8% of polymethylsiloxane, 4.95% of hydroxy silicone oil, 2.75% of stearic acid, and 0.5% of platinum catalyst; and
the component B comprises the following raw materials in parts by weight: 91.8% of polymethylsiloxane, 4.2% of hydroxy silicone oil, 1.6% of hydrogen silicone oil, 2.3% of stearic acid, and 0.1% of ethynylcyclohexanol.

2. The formula of the cosmetic optical silicone massage head according to claim 1, wherein the platinum catalyst is tetramethyldisiloxane platinum complex.

3. A preparation process for the formula of the cosmetic optical silicone massage head, comprising the following steps:
step 1: preparing the component A and the component B in the parts by weight, and injecting the component A and the component B into a static mixer in a ratio of 1:1 with a silicone feeding system;
step 2: injecting a mixed material from the static mixer into a barrel screw of a silicone injection machine by the feeding system;
step 3: injecting a fully mixed silicone material from the barrel into a mold with the silicone injection machine;
step 4: vacuuming the mold when a mold closure gap is 1 mm;
step 5: after the mold is completely closed, performing high-temperature hot vulcanization molding; and
step 6: opening the mold, and preparing the optical silicone head product by combining air blowing with manual demolding.

4. The preparation process for the formula of the cosmetic optical silicone massage head according to claim 3, wherein in the step 4, the mold is vacuumed for 2 seconds when the mold closure gap is 1 mm.

5. The preparation process for the formula of the cosmetic optical silicone massage head according to claim 3, wherein in the step 5, a temperature of a front mold is controlled at 140 °C, a temperature of a rear mold is controlled at 135 °C, and high-temperature hot vulcanization is performed for 125 seconds.
